# EUROPEAN PATENT APPLICATION

(11) **EP 1 889 875 A1**
(43) Date of publication of application: **20.02.2008**
(21) Application number: 06756981.4
(22) Date of filing: 05.06.2006
(51) Int. Cl.: C08L 67/04, C08K 5/04, C08L 101/16

(54) **BIODEGRADABLE POLYESTER RESIN COMPOSITION, METHOD FOR PRODUCING SAME, AND MOLDED BODY OBTAINED BY MOLDING SUCH COMPOSITION**

(30) Priority: 07.06.2005 JP 2005166973
(71) Applicant: UNITIKA LTD., Amagasaki-shi Hyogo 660-0824 (JP)
(72) Inventor: KABASHIMA, Yohei, Kyoto 611-0021 (JP); KAMIKAWA, Hiroo, Kyoto 611-0021 (JP)
(74) Representative: Pautex Schneider, Nicole Véronique
(86) International application number: PCT/JP2006/311235
(87) International publication number: WO 2006/132187

(57) **Abstract**

Disclosed is a resin composition obtained by blending 100 parts by mass of a biodegradable polyester resin, 0.01 to 20 parts by mass of a (meth)acrylic acid ester compound, 0.1 to 20 parts by mass of a peroxide and 0.1 to 50 parts by mass of a glycerin fatty acid ester.

## Description

### Technical Field

The present invention relates to a biodegradable polyester resin composition, a method for producing the same, and a molded body obtained by molding the composition. In particular, the present invention relates to a biodegradable polyester resin composition containing a biodegradable polyester resin, a (meth)acrylic acid ester compound, a peroxide and a glycerin fatty acid ester, having excellent mechanical strength, heat resistance and crystallization rate, and having low dependence to petroleum products, a method for producing the same, and a molded body obtained by molding the composition.

### Background Art

In recent years, biodegradable polyester resins have attracted attention from the viewpoint of environmental conservation. Of these, a polylactic acid, which is a crystalline polymer, has a higher melting point and heat resistance than those of the other biodegradable polyester resin. The polylactic acid is highly useful, because the polylactic acid is less costly due to its mass-producibility. As for the polylactic acid, a lactic acid as the raw material of the polylactic acid, which can be produced by using plants such as corn and sweet potato, can contribute to the saving of exhaustible resources such as petroleum.

However, the polylactic acid has a slower crystallization rate than that of PET (polyethylene terephthalate) generally having a slow crystallization rate. The polylactic acid, therefore, has drawbacks that the polylactic acid has a long molding cycle and a molded body obtained has inferior mechanical strength and heat resistance.

Then, a method for adding talc, silica and calcium lactate or the like as a crystalline nucleus agent to a lactic acid polymer has been proposed as a method for improving the crystallization rate of the polylactic acid there (for example, JP-A-8-193165). However, the lactic acid polymer obtained by the method has a still slow crystallization rate, and furthermore, the molded body obtained by the method has heat resistance of a low temperature of 100°C or less.

A method for adding a low molecular compound having an amide group and a layered clay mineral organized by an organic onium salt to a polylactic acid to enhance the crystallization rate and heat resistance of the polylactic acid by the synergistic effect has also been proposed (for example, JP-A-2003-226801). This method confirms the improvement of the crystallization rate and heat resistance, but the method has a still insufficient effect. The method has a long molding cycle in an injection molding process for obtaining a molded body using the polylactic acid and results in no application of heat resistance capable of withstanding actual use to the polylactic acid.

A method for adding an aromatic copolyester resin and a (meth)acrylic acid ester compound to a biodegradable polyester resin for improving the crystallization rate has been disclosed (for example, JP-A-20D3-128901). This method improves the crystallization rate, but the method exhibits insufficient effects.

### Disclosure of the Invention

The present invention aims to solve the above problems. It is an object of the present invention to provide a resin composition capable of attaining the crystallization and crystalline stabilization of the biodegradable polyester resin typified by the polylactic acid to provide excellent mechanical strength and heat resistance for actual use, capable of increasing the crystallization rate to shorten the molding cycle in the injection molding process, and therefore, having excellent productivity. It is another object of the present invention to provide a molded body capable of being really used.

As the results of the intensive studies for solving the problems, the present inventors have found that the problems are solved by using the biodegradable polyester resin along with a (meth)acrylic acid ester compound, a peroxide and a glycerin fatty acid ester, and attained the present invention.

That is, the scope of the present invention is as follows.

(1) A biodegradable polyester resin composition which is obtained by blending 100 parts by mass of a biodegradable polyester resin, 0.01 to 20 parts by mass of a (meth)acrylic acid ester compound, 0.1 to 20 parts by mass of a peroxide and 0.1 to 50 parts by mass of a glycerin fatty acid ester.

(2) The biodegradable polyester resin composition according to the item (1), wherein the biodegradable polyester resin is a polylactic acid.

(3) The biodegradable polyester resin composition according to the item (1) or (2), wherein the glycerin fatty acid ester is glycerin diacetomonocaprylate or glycerin diacetomonolaurate.

(4) A method for producing a biodegradable polyester resin composition which includes:
adding a mixture of 0.01 to 20 parts by mass of a (meth)acrylic acid ester compound and/or 0.1 to 20 parts by mass of a peroxide and 0.1 to 50 parts by mass of a glycerin fatty acid ester to 100 parts by mass of a biodegradable polyester resin; and
melt-kneading the mixture and the biodegradable polyester resin.

(5) A molded body which is obtained by molding the resin composition according to any one of the items (1) to (3).

### Effect of the Invention

The present invention can improve the crystallization rate of the resin composition by using the biodegradable polyester resin along with the (meth)acrylic acid ester compound, the peroxide and the glycerin fatty acid ester, and thus the resin composition has excellent moldability and productivity. In addition, the present invention can provide a resin composition having a low dependence to petroleum products. Since this resin composition can be molded as various molded bodies by various molding processes, the resin composition has an extremely high industrial application value. Since the resin composition and the molded body obtained therefrom can use a natural-product-derived biodegradable resin, the resin composition and the molded body can contribute to the saving of exhaustible resources such as petroleum.

### Best Mode for Carrying Out the Invention

Hereinafter, the present invention will be described in detail.

Examples of biodegradable polyester resins used for the present invention include poly(L-lactic acid), poly(D-lactic acid), polyglycolic acid, polycaprolactone, polybutylene succinate, polyethylene succinate, poly(butylene adipate terephthalate) and poly(butylene succinate terephthalate). The biodegradable polyester resins may be used in combination of two or more kinds. From the standpoint of saving petroleum resources, plant-derived raw materials are preferable. Among the plant-derived raw materials, poly(L-lactic acid), poly(D-lactic acid) and a mixture or copolymer thereof are desirably used in view of heat resistance and moldability. It is preferable that poly(L-lactic acid) is mainly used from the standpoint of biodegradability.

The polylactic acid which is mainly composed of poly(L-lactic acid) has a melting point changed according to optical purity. In the present invention, the melting point of the polylactic acid is preferably set to not less than 160°C in view of the mechanical characteristics and heat resistance of a molded body. The rate of the component of D-lactic acid may be set to less than about 3 mol % for setting the melting point of the polylactic acid which is mainly composed of poly(L-lactic acid) to not less than 160°C.

The biodegradable polyester resin preferably has a melt flow rate of 0.1 to 50 g/10 minutes as measured under a load of 21.2 N at 190°C. The melt flow rate is more preferably 0.2 to 20 g/10 minutes, and still more preferably 0.5 to 10 g/ minutes. If the melt flow rate is more than 50 g/10 minutes, a molded body obtained from the resin may be inferior in mechanical characteristics and heat resistance, because the melt viscosity of the resin is excessively low. If the melt flow rate is less than 0.1 g/10 minutes, a load exerted in a molding process using the resin may be excessively high, thereby deteriorating the operability.

The biodegradable polyester resin is typically produced by employing a known melt polymerization method optionally along with a solid-phase polymerization method. When the melt flow rate of the biodegradable polyester resin is excessively high, the melt flow rate is adjusted within a predetermined range by increasing the molecular weight of the resin with the use of a small amount of a chain-extending agent such as a diisocyanate compound, a bisoxazolin compound, an epoxy compound and an acid anhydride. When the melt flow rate is excessively low, a polyester resin having a higher melt flow rate or a low molecular weight compound is mixed.

Compounds containing at least two (meth)acrylic groups or at least one (meth)acrylic group and at least one glycidyl group or vinyl group in a molecule are preferable as (meth)acrylic acid ester compounds used in the present invention, because the compounds are highly reactive to the biodegradable polyester resin and thus monomer hardly remains, and the compounds cause little coloring of the resin. Specific examples of such compounds include glycidyl methacrylate, glycidyl acrylate, glycerol dimethacrylate, trimethylolpropane trimethacrylate, trimethylolpropane triacrylate, allyloxypolyethylene glycol monoacrylate, allyloxypolyethylene glycol monomethacrylate, polyethylene glycol dimethacrylate, polyethylene glycol diacrylate, polypropylene glycol dimethacrylate, polypropylene glycol diacrylate and polytetramethylene glycol dimethacrylate. Additional examples thereof include copolymers thereof containing alkylene glycol moieties thereof having alkylene chains having various lengths, butanediol methacrylate and butanediol acrylate. Of these, polyethylene glycol dimethacrylate and polypropylene glycol dimethacrylate or the like are preferable in view of the reactivity to the polylactic acid.

The proportion of the (meth)acrylic acid ester compound should be 0.01 to 20 parts by mass based on 100 parts by mass of the biodegradable polyester resin, preferably 0.05 to 10 parts by mass, and more preferably 0.1 to 5 parts by mass. When the proportion is less than 0.01 parts by mass, a cycle is not shortened in the injection molding process intended by the present invention. On the other hand, the extrusion operability in obtaining the resin composition may be difficult at a proportion of more than 20 parts by mass.

Examples of peroxides used in the present invention include benzoyl peroxide, bis(butylperoxy)trimethylcyclohexane, bis(butylperoxy)cyclododecane, butylbis(butylperoxy)valerate, dicumyl peroxide, butylperoxybenzoate, dibutyl peroxide, bis(butylperoxy)diisopropylbenzene, dimethyldi(butylperoxy)hexane, dimethyldi(butylperoxy)hexyne and butylperoxycumene.

The proportion of the peroxide should be 0.1 to 20 parts by mass, preferably 0.1 to 10 parts by mass based on 100 parts by mass of the biodegradable polyester resin. When the proportion is less than 0.1% by mass, a cycle is not shortened in the injection molding process intended by the present invention. The peroxide may be mixed even at a proportion of more than 20 parts by mass, but the proportion is not necessarily economical. The proportion is disadvantageous in terms of the cost. Since the peroxide is decomposed when the peroxide and the resin are melt-kneaded, the content of the peroxide may be reduced in the obtained resin composition as compared to that at a time of blending the peroxide with the resin.

Specific examples of glycerin fatty acid esters used in the present invention include acetyl monoglycerides such as glycerin diacetomonocaprylate and glycerin diacetomonolaurate. These may be used alone or in a combination.

The proportion of the glycerin fatty acid ester should be 0.1 to 50 parts by mass based on 100 parts by mass of the biodegradable polyester resin, preferably 0.1 to 20 parts by mass. When the proportion is less than 0.1 parts by mass or is more than 50 parts by mass, trouble occurs in the melt-kneading extrusion for producing the resin composition and in the injection molding for producing a molded object. Since the glycerin fatty acid ester may volatilize when the glycerin fatty acid ester is blended with a resin, the content may decrease in the obtained resin composition as compared to that at a time of blending the glycerin fatty acid ester with the resin.

Examples of' methods for blending the (meth)acrylic acid ester compound, the peroxide and the glycerin fatty acid ester with the biodegradable polyester resin include a method for melt-kneading using a general-purpose extruder. A twin screw extruder is preferably used for improving the kneading state. The kneading temperature is preferably in a range of (the melting point of the biodegradable polyester resin + 5°C) to (the melting point of the biodegradable polyester resin + 100°C). The kneading time is preferably 20 seconds to 30 minutes. When the temperature is lower than the range or the kneading time is shorter than the range, the kneading degree and the reaction itself become insufficient. On the contrary, when the temperature is higher than the range or the kneading time is longer than the range, the resin may be decomposed and colored. When the (meth)acrylic acid ester compound is in a solid state in blending the (meth)acrylic acid ester compound, a method for supplying the (meth)acrylic acid ester compound using a dry blend or a powder feeder is preferable. When the (meth)acrylic acid ester compound is in a liquid state, a method for pressurizing the (meth)acrylic acid ester compound using a pump to directly inject the (meth)acrylic acid ester compound in the liquid state into a barrel of an extruder is preferable.

Preferable examples of methods in the case of blending the (meth)acrylic acid ester compound, the peroxide and the glycerin fatty acid ester with the biodegradable polyester resin include a method for dissolving or dispersing the (meth)acrylic acid ester compound and/or the peroxide in the glycerin fatty acid ester as a medium to inject the resulting solution or mixture into a kneader. This method may be able to markedly improve the operability. In detail, a glycerin fatty acid ester solution or dispersion liquid of the (meth)acrylic acid ester compound can be injected while the biodegradable polyester resin and the peroxide are melt-kneaded. Alternatively, a glycerin fatty acid ester solution or dispersion liquid of the (meth)acrylic acid ester compound and peroxide can be injected while the biodegradable polyester resin is melt-kneaded.

A pigment, a heat stabilizer, an oxidation inhibitor, a weather-proof agent, a flame retarder, a plasticizer, a lubricant, a release agent, an antistatic agent, a filler, a crystalline nucleus agent or the like may be added to the resin composition of the present invention, as long as the properties of the resin composition are not significantly damaged by the addition. Examples of the heat stabilizer and the oxidation inhibitor include hindered phenols, phosphorus compounds, hindered amines, sulfur compounds, copper compounds and halides of alkali metals. Examples of the plasticizer include an aliphatic polycarboxylic acid ester derivative, an aliphatic polyhydric alcohol ester derivative, an aliphatic oxyester derivative, an aliphatic polyether derivative, and an aliphatic polyether polycarboxylic acid ester derivative. Specific examples of these plasticizers include glycerin diacetomonocaprylate, glycerin diacetomonolaurate, polyglycerin acetate, dimethyladipate, dibutyladipate, triethylene glycol diacetate, methyl acetyl ricinolate, acetyl tributyl citrate, polyethylene glycol, dibutyl diglycol succinate, bis(butyldiglycol)adipate and bis(methyldidiglycol)adipate. As the flame retarder, a halogen flame retarder, a phosphorus flame retarder and inorganic flame retarder can be used. Of these, a non-halogen flame retarder is desirably used in consideration of the environment. Examples of the non-halogen flame retarders include a phosphorus flame retarder, a hydrated metal compound (aluminium hydroxide and magnesium hydroxide), a nitrogen-containing compound (a melamine-based and a guanidine-based), and an inorganic compound (a borate and a Mo compound). Exemplary inorganic fillers include talc, calcium carbonate, zinc carbonate, walastonite, silica, alumina, magnesium oxide, calcium silicate, sodium aluminate, calcium aluminate, sodium aluminosilicate, magnesium silicate, glass balloon, carbon black, zinc oxide, antimony trioxide, zeolite, hydrotalcite, metal fibers, metal whisker, ceramic whisker, potassium titanate, boron nitride, graphite, glass fibers and carbon fibers. Exemplary organic fillers include naturally occurring polymers such as starch, cellulose particles, wood powder, bean curd lees, chaff and bran, and their modifications. Exemplary inorganic crystalline nucleus agents include talc and kaolin. Exemplary organic crystalline nucleus agents include sorbitol compounds, metal salts of benzoic acid and its compounds, metal salts of phosphate, rosin compounds and amide compounds. Examples of the amide compounds include compounds having a carbohydrazide skeleton such as N,N' ,N"-tricyclohexyl trimesic amide, trimesic acid tris(t-butylamide), 1,4-cyclohexanedicarboxylic acid dianilide, 2,6-naphthalenedicarboxylic acid dicyclohexyl amide, N,N'-dibenzoyl-1,4-diaminocyclohexane, N,N'-diayclohexanecarbonyl-1,5-diaminonaphthalene, ethylenebis(12-hydroxy stearic acid amide) and decamethylenedicarbonyldibenzoylhydrazide. The method for mixing these to the biodegradable polyester resin composition of the present invention is not particularly limited.

The resin composition of the present invention can be molded as various molded bodies using a molding process such as an injection molding process, a blow molding process, an extrusion molding process and an inflation molding process, and a forming process such as a post-sheeting vacuum forming process, a post-sheeting air pressure forming process and a post-sheeting vacuum air pressure forming process. The injection molding process is particularly preferable, and it is possible to employ a gas injection molding process and an injection press molding process or the like in addition to an ordinary injection molding process. As an example of injection molding conditions suitable for the resin composition of the present invention, a cylinder temperature is suitably not less than the melting point [Tm] or fluidization temperature of the biodegradable polyester resin, preferably 190 to 280°C, and more preferably 210 to 270°C. It is preferable that a mold temperature is not more than (the melting point [Tm] of the resin composition - 20°C). If the molding temperature is excessively low, faulty filling occurs in the molded object, and the operability tends to be unstabilized or overloaded. Conversely, if the molding temperature is excessively high, the resin composition is decomposed, so that the resulting molded body disadvantageously tends to have a reduced strength or be colored.

The heat resistance of the resin composition of the present invention can be improved by accelerating the crystallization of the biodegradable polyester resin. As a method therefor, the crystallization can be accelerated by, for example, devising the cooling condition in the mold in the injection molding process. In this case, when the glass transition temperature of the biodegradable polyester resin and the melting point thereof are set to Tg and Tm, it is preferable that the mold is kept at a temperature not less than (Tg + 20°C) and not more than (Tm - 20°C) for a predetermined period, and then cooled to not more than Tg. It is preferable that the mold is directly cooled to not more than Tg, and then a heat treatment is performed at a temperature of not less than Tg and not more than (Tm - 20°C) as a method for accelerating the crystallization after molding.

Specific examples of the molded bodies include resin components for electrical appliances such as various housings; resin components for agricultural materials such as containers and cultivation containers and agricultural machines; components for fish business resin such as floats and fish processing product containers; tableware and food containers such as dishes, cups and spoons; medical resin components such as injectors and intravenous containers; resin components for housing/civil engineering/building materials such as drain materials, fences, storage boxes and building construction work switchboards; resin components for leisure and general merchandises such as cooler boxes, fans and toys; and resin components for vehicles such as bumpers, instrument panels and door trims. Examples of the molded bodies include extrusion-molded objects and hollow molded objects such as films, sheets and pipes.

### Examples

The present invention will be more specifically described with the reference to examples.

Measuring methods used for evaluating resin compositions of the following Examples and Comparative Examples are as follows.

### (1) Melt Flow Rate (MFR, g/10 minutes):

The melt flow rate was measured at 190°C under a load of 21.2 N in conformity with JIS K-7210 (test condition 4).

### (2) Kneading Operability:

A resin discharged from a melt-kneader was pulled in a strand form, and the degree of the operability in processing the resin into a pellet form was estimated in three steps according to the standard shown below. "G" is a pass level.

G: The resin discharged from the melt-kneader could be stably pulled in the strand form, and could be processed into the pellet form.

M: The resin could not be stably pulled in the strand form, and the resin was hardly processed into the pellet form.

P: The resin could not be pulled in the strand form, and a resin composition could not be obtained.

### (3) Molding Cycle (second):

Each of the resin compositions obtained by Examples and Comparative Examples was molded by means of an injection molding machine (IS-80G manufactured by Toshiba Machine Co., Ltd.) to obtain test samples. All of the resin compositions were melted at a cylinder setting temperature of 170 to 190°C. A mold of 105°C was filled with the melted resin compositions in the injection pressure of 100 MPa and the injection time of 30 seconds. The molding cycle was set to time (second) until the molded body can be taken out without being adhered to the mold after the resin composition was injected (filled and pressure-kept) in the mold and cooled, or the molded body can be freely taken out from the mold. The molded bodies of not less than 100 seconds were not evaluated.

### (4) Bending Strength, Bending Elastic Modulus and Bending Rupture Strain:

The bending strength, the bending elastic modulus and the bending rupture strain were measured based on ISO178.

### (5) Charpy Impact Strength:

The Charpy impact strength was measured based on ISO179.

### (6) Heat Deformation Temperature (°C) :

The heat deformation temperature was measured under a load of 0.45 MPa based on ISO75

### (7) Crystallization Degree (%):

The crystallization degree was measured by a WAXD reflective film method (X-ray: Cu-Kα line/50 kV/30 mA, scanning speed: 2°/min) using an RAD-rB X-ray diffraction apparatus (manufactured by Rigaku Corporation), and was calculated from an integration intensity rate due to a multiplex peak separation method.

### (8) Crystallization Rate (minute):

Using a DSC apparatus (Pyrisl DSC manufactured by PerkinElmer Inc.), a sample was heated to 200°C from 20°C at a temperature increase rate of 500°C/min and kept at 200°C for 5 minutes. Then, the temperature was decreased to 130°C from 200°C at 500°C/min and kept at 130°C to allow the crystallization. Time required for leading to the peak top of the crystallization at a constant temperature of 130°C was defined as crystallization rate (minute).

Raw materials used in Examples and Comparative Examples are shown below.

### [Biodegradable Polyester Resin]

A polylactic acid "NatureWorks 4030D" manufactured by Cargill Dow LLC and having an MFR of 3.0 g/10 minutes and a melting point of 166°C (hereinafter, abbreviated as "PLA").

### [(Meth)Acrylic Acid Ester Compound]

Polyethylene glycol dimethacrylate (manufactured by NOF Corporation)

### [Peroxide]:

Di-t-butyl peroxide (manufactured by NOF Corporation) [Glycerin Fatty Acid Ester] :

Glycerin diacetomonocaprylate (manufactured by Riken Vitamin Co., Ltd.), glycerin diacetomonolaurate (manufactured by Riken Vitamin Co., Ltd.)

### [Compound Used in Comparative Example]

Diethylene glycol dibenzoate (manufactured by Riken Vitamin Co., Ltd.), diethylene glycol diethylether (manufactured by Riken Vitamin Co., Ltd.), acetyl tributyl citrate (manufactured by Kao Corporation)

### Example 1 (Resin Composition A)

A twin screw extruder (TEM-37BS manufactured by Toshiba Machine Co., Ltd.) was used, and PLA of 100 parts by mass was supplied to a top feeder. A solution in which a (meth)acrylic acid ester compound of 1 part by mass and a peroxide of 2 parts by mass were dissolved in glycerin diacetomonocaprylate of 1 part by mass was injected using a pump from the middle of a kneader. PLA and the solution were melt-kneaded and extruded at a processing temperature of 170 to 190°C, and the discharged resin was processed into a pellet form to obtain a resin composition A.

### Examples 2 to 4 (Resin Compositions B to D)

PLA and the solution were melt-kneaded and extruded using the same apparatus as that of Example 1 under the same condition as in Example 1 to obtain resin compositions B to D except that the blending rate of glycerin diacetomonocaprylate was changed as compared to that of Example 1.

### Example 5 (Resin Composition E)

PLA and the solution were melt-kneaded and extruded using the same apparatus as that of Example 1 under the same condition as in Example 1 to obtain a resin composition E except that glycerin diacetomonolaurate of 10 parts by mass was used in place of glycerin diacetomonocaprylate.

### Example 6 (Resin Composition F)

PLA and the solution were melt-kneaded and extruded using the same apparatus as that of Example 1 under the same condition as in Example 1 to obtain a resin composition F except that the blending rates of the (meth)acrylic acid ester compound, peroxide and glycerin diacetomonocaprylate were respectively set to 0.1 parts by mass, 0.1 parts by mass and 10 parts by mass.

### Example 7 (Resin Composition G)

PLA and the solution were melt-kneaded and extruded using the same apparatus as that of Example 1 under the same condition as in Example 1 to obtain a resin composition G except that the blending rates of the (meth)acrylic acid ester compound, peroxide and glycerin diacetomonocaprylate were respectively set to 5 parts by mass, 5 parts by mass and 10 parts by mass.

### Example 8 (Resin Composition H)

PLA and the solution were melt-kneaded and extruded using the same apparatus as that of Example 1 under the same condition as in Example 1 to obtain a resin composition H except that the blending rates of the (meth)acrylic acid ester compound, peroxide and glycerin diacetomonocaprylate were respectively set to 0.1 parts by mass, 0.1 parts by mass and 0.5 parts by mass.

### Example 9 (Resin Composition I)

PLA and the solution were melt-kneaded and extruded using the same apparatus as that of Example 1 under the same condition as in Example 1 to obtain a resin composition I except that the blending rates of the (meth)acrylic acid ester compound, peroxide and glycerin diacetomonocaprylate were respectively set to 5 parts by mass, 10 parts by mass and 20 parts by mass.

### Comparative Example 1 (Resin Composition J)

PLA of 100 parts by mass was supplied to a top feeder of a twin screw extruder, and a (meth)acrylic acid ester compound of 1 part by mass and a peroxide of 2 parts by mass were supplied using a pump from the middle of a kneader. PLA, the (meth)acrylic acid ester compound and the peroxide were melt-kneaded and extruded at a processing temperature of 170 to 190°C. However, since the discharged strand was not stably pulled, the strand could not be processed into a pellet form, and a resin composition could not be obtained.

### Comparative Example 2 (Resin Composition K)

PLA of 100 parts by mass was supplied to a top feeder of a twin screw extruder, and a solution in which a (meth)acrylic acid ester compound of 1 part by mass and a peroxide of 2 parts by mass were dissolved in glycerin diacetomonocaprylate of 0.05 parts by mass was injected using a pump from the middle of a kneader. PLA and the solution were melt-kneaded and extruded at a processing temperature of 170 to 190°C. However, since the discharged strand was not stably pulled, the strand could not be processed into a pellet form, and a resin composition could not be obtained.

### Comparative Example 3 (Resin Composition L)

PLA of 100 parts by mass was supplied to a top feeder of a twin screw extruder, and a solution in which a (meth)acrylic acid ester compound of 1 part by mass and a peroxide of 2 parts by mass were dissolved in glycerin diacetomonocaprylate of 60 parts by mass was injected using a pump from the middle of a kneader. PLA and the solution were melt-kneaded and extruded at a processing temperature of 170 to 190°C to obtain a resin composition L.

### Comparative Example 4 (Resin Composition M)

PLA and the solution were melt-kneaded and extruded using the same apparatus as that of Example 1 under the same condition as in Example 1 to obtain a resin composition M except that diethylene glycol dibenzoate of 10 parts by mass was used in place of glycerin diacetomonocaprylate.

### Comparative Example 5 (Resin Composition N)

PLA and the solution were melt-kneaded and extruded using the same apparatus as that of Example 1 under the same condition as in Example 1 to obtain a resin composition N except that diethylene glycol diethylether of 10 parts by mass was used in place of glycerin diacetomonocaprylate.

### Comparative Example 6 (Resin Composition O)

PLA and the solution were melt-kneaded and extruded using the same apparatus as that of Example 1 under the same condition as in Example 1 to obtain a resin composition O except that acetyl tributyl citrate of 10 parts by mass was used in place of glycerin diacetomonocaprylate.

### Comparative Example 7 (Resin Composition P)

PLA of 100 parts by mass was supplied to a top feeder of a twin screw extruder, and glycerin diacetomonocaprylate of 10 parts by mass was supplied using a pump from the middle of a kneader. PLA and glycerin diacetomonocaprylate were melt-kneaded and extruded at a processing temperature of 170 to 190°C. The discharged resin was processed into a pellet form to obtain a resin composition P.

### Comparative Example 8 (Resin Composition Q)

PLA of 100 parts by mass was supplied to a top feeder of a twin screw extruder, and a solution in which a (meth)acrylic acid ester compound of 0.005 parts by mass and a peroxide of 0.05 parts by mass were dissolved in glycerin diacetomonocaprylate of 10 parts by mass was injected using a pump from the middle of a kneader. PLA and the solution were melt-kneaded and extruded at a processing temperature of 170 to 190°C, and the discharged resin was processed into a pellet form to obtain a resin composition Q.

### Comparative Example 9 (Resin Composition R)

PLA of 100 parts by mass was supplied to a top feeder of a twin screw extruder, and a solution in which a (meth)acrylic acid ester compound of 30 parts by mass and a peroxide of 30 parts by mass were dissolved in glycerin diacetomonocaprylate of 10 parts by mass was injected using a pump from the middle of a kneader. PLA and the solution were melt-kneaded and extruded at a processing temperature of 170 to 190°C. However, a solution injection port was clogged with PLA and the solution after 10 minutes from the starting. The solution could not be injected and a resin composition could not be obtained.

Table 1 shows the results of evaluated various physical properties collectively.

**[Table 1]**

| | | | | Examples | | | | | | | | | Comparative Examples | | | | | | | | |
|---|---|---|---|---|---|---|---|---|---|---|---|---|---|---|---|---|---|---|---|---|---|
| | | | | 1 | 2 | 3 | 4 | 5 | 6 | 7 | 8 | 9 | 1 | 2 | 3 | 4 | 5 | 6 | 7 | 8 | 9 |
| Resin composition | | | | A | B | C | D | E | F | G | H | I | J | K | L | M | N | O | P | Q | R |
| Raw material blending rate | Biodegradable polyester resin | | | 100 | 100 | 100 | 100 | 100 | 100 | 100 | 100 | 100 | 100 | 100 | 100 | 100 | 100 | 100 | 100 | 100 | 100 |
| | (meth)acrylic acid ester compound | | | 1 | 1 | 1 | 1 | 1 | 0.1 | 5 | 0.1 | 5 | 1 | 1 | 1 | 1 | 1 | 1 | | 0.005 | 30 |
| | Peroxide | | | 2 | 2 | 2 | 2 | 2 | 0.1 | 5 | 0.1 | 10 | 2 | 2 | 2 | 2 | 2 | 2 | | 0.05 | 30 |
| | Glycerin fatty acid ester | Glycerin diacetomonocaprylate | | 1 | 10 | 20 | 40 | | 10 | 10 | 0.5 | 20 | | 0.05 | 60 | | | | 10 | 10 | 10 |
| | | Glycerin diacetomonolaurate | | | | | | 10 | | | | | | | | | | | | | |
| | Others | Diethylene glycol dibenzoate | | | | | | | | | | | | | | 10 | | | | | |
| | | Diethylene glycol diethylether | | | | | | | | | | | | | | | 10 | | | | |
| | | Acetyl tributyl citrate | | | | | | | | | | | | | | | | 10 | | | |
| Kneading | Kneading operability | | | G | G | G | G | G | G | G | G | G | P | P | M | G | G | G | G | G | P |
| Molding | Molding cycle | | (second) | 58 | 56 | 54 | 58 | 56 | 58 | 58 | 54 | 58 | - | - | 88 | 85 | 82 | 85 | ≥600 | ≥100 | - |
| Physical properties | Bending strength | | (MPa) | 90 | 88 | 89 | 88 | 91 | 85 | 91 | 90 | 84 | - | - | 82 | 86 | 91 | 90 | - | - | - |
| | Bending elastic modulus | | (GPa) | 4.3 | 4.5 | 4.4 | 4.3 | 4.5 | 4.2 | 4.8 | 4.3 | 4.1 | - | - | 4.1 | 4.1 | 4.3 | 4.2 | - | - | - |
| | Bending rupture strain | | (%) | 2.1 | 2 | 2 | 2.1 | 2.2 | 2.1 | 2 | 2.2 | 2.2 | - | - | 2.4 | 2.2 | 2 | 2.2 | - | - | - |
| | Charpy impact strength | | (kJ/m²) | 2.3 | 2.3 | 2.4 | 2.6 | 2.1 | 2.3 | 2.1 | 2.1 | 2.4 | - | - | 2.3 | 2.2 | 1.8 | 2.2 | - | - | - |
| | Heat deformation temperature | | (°C) | 123 | 131 | 126 | 121 | 124 | 120 | 126 | 124 | 120 | - | - | 96 | 110 | 108 | 112 | - | - | - |
| | Crystallization degree | | (%) | 42 | 46 | 44 | 45 | 43 | 42 | 45 | 46 | 43 | - | - | 32 | 34 | 35 | 34 | - | - | - |
| | Crystallization rate | | (minute) | 1.2 | 1.0 | 1.1 | 1.3 | 1.2 | 1.3 | 0.9 | 0.9 | 1.2 | - | - | 2 | 1.7 | 1.8 | 1.7 | - | - | - |

The resin compositions A to I obtained in Examples 1 to 9 had excellent kneading operability, cooling time (molding cycle) in the molding process, mechanical characteristics, heat resistance (heat deformation temperature), crystallization degree and crystallization rate.

Comparative Examples 1, 2 and 9 could not provide the resin composition as described above.

Since Comparative Example 3 used glycerin diacetomonocaprylate of not less than a specified range, the strand discharged from the kneading extruder could not be stably pulled, and it was difficult to obtain the resin composition.

Since diethylene glycol dibenzoate was used, Comparative Example 4 had inferior heat resistance, cooling time in the molding process, crystallization degree and crystallization rate.

Since diethylene glycol diethylether was used, Comparative Example 5 had inferior cooling time in the molding process, crystallization degree and crystallization rate.

Since acetyl tributyl citrate was used, Comparative Example 6 had inferior cooling time in the molding process, crystallization degree and crystallization rate.

Since (meth)acrylic acid ester compound and peroxide were not contained, Comparative Example 7 enlarged the cooling time in the molding process, and could obtain an insufficient molded body.

Since (meth)acrylic acid ester compound and peroxide were used at only the blending rates of not more than a specified range, Comparative Example 8 enlarged the cooling time in the molding process, and could obtain an insufficient molded body.

## Claims

1. A resin composition obtained by blending 100 parts by mass of a biodegradable polyester resin, 0.01 to 20 parts by mass of a (meth)acrylic acid ester compound, 0.1 to 20 parts by mass of a peroxide and 0.1 to 50 parts by mass of a glycerin fatty acid ester.

2. The resin composition according to claim 1, wherein the biodegradable polyester resin is a polylactic acid.

3. The resin composition according to claim 1, wherein the glycerin fatty acid ester is glycerin diacetomonocaprylate or glycerin diacetomonolaurate.

4. A method for producing a resin composition comprising:
adding a mixture of 0.01 to 20 parts by mass of a (meth)acrylic acid ester compound and/or 0.1 to 20 parts by mass of a peroxide and 0.1 to 50 parts by mass of a glycerin fatty acid ester to 100 parts by mass of a biodegradable polyester resin; and
melt-kneading the mixture and the biodegradable polyester resin.

5. A molded body obtained by molding the resin composition according to claim 1.

6. A molded body obtained by molding the resin composition according to claim 2.

7. A molded body obtained by molding the resin composition according to claim 3.
